# EUROPEAN PATENT SPECIFICATION

(11) **EP 1 813 086 B1**
(45) Date of publication and mention of the grant of the patent: **12.02.2014**
(21) Application number: 05796140.1
(22) Date of filing: 21.10.2005
(51) Int. Cl.: H04L 29/08

(54) **GRAPHICAL USER INTERFACE FOR PUSH-TO-TALK COMMUNICATIONS**
GRAPHISCHE BENUTZEROBERFLÄCHE FÜR PUSH-TO-TALK-KOMMUNIKATION
INTERFACE D'UTILISATEUR GRAPHIQUE POUR COMMUNICATIONS AVEC POUSSOIR DE CONVERSATION

(30) Priority: 22.10.2004 GB 0423549
(43) Date of publication of application: 01.08.2007
(73) Proprietor: Orange SA, London W1U 7DZ (GB)
(72) Inventor: ALLAN, Robert, Bradley Stoke, Bristol BS32 4QJ (GB)
(74) Representative: Thiel, Frédéric
(86) International application number: PCT/GB2005/004073
(87) International publication number: WO 2006/043082

(56) References cited:
- US-A1- 2002 075 306
- EMMERSON, BOB: "More Wireless Waves"[Online] August 2004 (2004-08), pages 1-2, XP002360373 Retrieved from the Internet: URL:http://www.vonmag.com/issue/2004/julau g/features/wireless_waves.asp> [retrieved on 2005-12-20]
- MAUREER, FLORIAN: "Push-2-Talk in VOIP"[Online] 1 June 2004 (2004-06-01), pages 1-17, XP002360374 Retrieved from the Internet: URL:http://people.ee.ethz.ch/~maurerfl/pro jects/p2t/florian.maurer-2G1325-push2talk- 20040601.pdf> [retrieved on 2005-12-20]

## Description

### Field of the Invention

The present invention relates to methods, computer programs, apparatus and systems for providing a user interface for a push to talk (PTT) telecommunications service.

### Background of the Invention

Push to talk is a telecommunications service which can be provided over digital cellular networks, such as the Nextel™ proprietary network, which is a cellular radio communications network specifically adapted to provide PTT communications, and more recently over generic cellular radio communications networks such GSM networks. Such a service is e.g. known by XP 2360373.

Conventional call setup procedures in cellular networks require a calling party to select one or more called parties, for example by selecting phonebook entries using their terminal, and to initiate the call to those parties, and then for each of the called parties to be alerted to the call, for example by means of a ringing tone, and accept the call using their terminal. PTT enables a more spontaneous form of communication. Two or more parties form a group and are provided with an always on connection to the cellular network. Once a PTT session has been initiated, any of the parties to the session may then simply push a PTT button, or softkey, on their terminal to talk to the rest of the group. Once the session has been set up there is no call setup procedure and the other group members need not indicate acceptance of a call. The speech of a talking party is immediately communicated from the talking party's terminal over the cellular network to the terminals of all of the other group members where it is reproduced. For example, the speech may be output from loudspeakers of the terminals of the other group members. PTT groups may be pre-provisioned on the terminal or set up ad hoc on a session-by-session basis. However, once a PTT communications session is established, communication is flexible and virtually instantaneous.

In many ways the cellular radio PTT services are similar to a two-way radio service, albeit with the significant advantages of enhanced geographical coverage, speech quality, the ability to offer conventional call services from the same terminal, and other advances capabilities offered by modem digital cellular networks.

The PTT telecommunications service typically uses a half duplex mode of communication in which only the talking party speech is transmitted and the other parties are unable to talk until the talking party releases "control of the floor" by releasing the PTT button or by network intervention. By using a half duplex mode over a packet-based service, such as the General Packet Radio Service (GPRS), PTT communication is more efficient in terms of radio and core network resource utilization than conventional-circuit switched conference calls. This allows new forms of communication in cellular networks which would otherwise have been prohibitively expensive, in particular for large groups of people over long periods of time.

PTT can be of significant use to small and medium enterprises such as courier services, direct sale groups, hotels, taxi and transport services, and repair and security services and to teams within larger corporations as well as leisure groups and communities engaged in sports and outdoor activities including mobile or location-based gaming and to family groups or groups of friends, especially in the youth sector.

The Open Mobile Alliance (OMA) has published technical specifications for a PTT service over cellular networks (PoC). Various features of the PTT service are set out in the PoC specifications, including network architecture, service functionality and signaling flows. It is intended to standardize many features to enable interoperability between terminals and networks. However, user interface features are not specified.

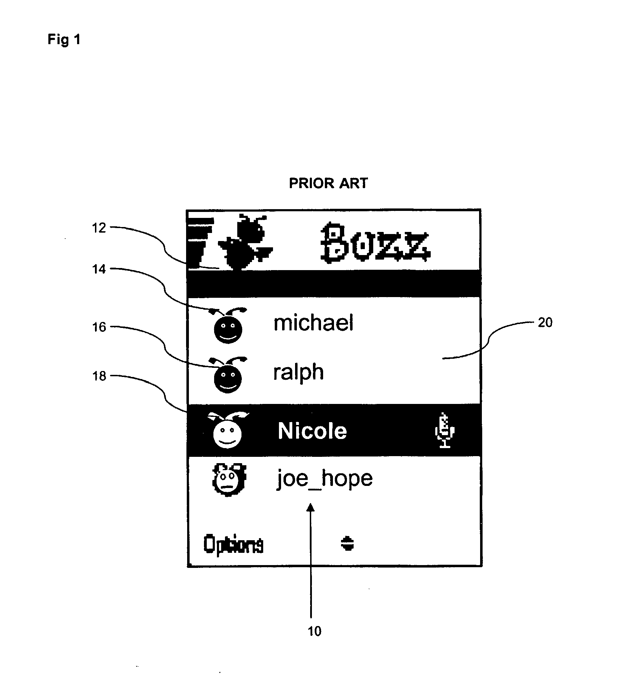

A known user interface for a PTT service called "Buzz2talk" by IndTeleSoft™ is shown in Figure 1. The parties in the PTT session are indicated on the user interface using the alphanumeric identifiers "michael", "Ralph", "Nicole", and "joe_hope". These user identifiers are displayed in a list 10 with additional information shown by user icons 12, 14, 16, 18. To indicate that she currently has the floor, Nicole's name and user icon 16 are highlighted in the list and a microphone icon 20 is displayed alongside. The user icons are varied to indicate their current availability. Michael, Ralph, and Nicole are all able to participate in the PTT session, and are shown using a first type of icon 12, 14, 16. However, joe_hope is unavailable in this example, and is shown using a second type of icon 18.

One problem with the approach of the known user interface above is that of lack of clarity. As the numbers of parties in a session increases, representing the various different states and roles that exist in a PTT session clearly to the user of a terminal participating in the session becomes particularly desirable. The prior art approach, however, lacks convenience of reference, even when there are relatively small numbers of parties in a session.

### Summary of the Invention

According to one embodiment of the present invention, there is provided a method of providing a user interface on a display of a user terminal during a push to talk communications session involving a user of the user terminal, the method comprising:
receiving data indicating current states of said session; and
generating a user interface on said display, said user interface including user identifiers for a plurality of different parties in the push to talk session, wherein said user identifiers are arranged in a configuration on said display, said configuration including a position which is predetermined in said configuration,
wherein the method comprises:
   placing a first user identifier, for a first party, in said predetermined position, in response to receiving data indicating a current session state involving said first party; and
   placing a second user identifier, for a second party, in said predetermined position, in response to receiving data indicating a current session state involving said second party.

Advantageously, the present invention is able to graphically represent relationships between parties involved in a PTT session in a more intuitive manner than list-based approaches. In particular, in view of the potentially large numbers of parties that may be involved in PTT sessions, and the potential for many changes during the life time of a PTT session, the present invention is better able to graphically represent static and changing relationships between parties involved in a PTT session than list-based approaches.

The relationship may indicate which one of the parties has control of the floor of the push to talk session. The relationship may indicate which of the parties is in a queue for control of the floor of the push to talk session. The relationship may indicate an order in which the parties are queuing for control of the floor of the push to talk session.

Preferably, the display comprises an up-down direction and a side-to-side direction, and the configuration comprises user identifiers distributed across said display in both said up-down direction and said side-to-side direction. In this way, where large numbers of users are party to the session, large numbers of user identifiers can be distributed across the screen whilst maintaining meaningful indicators of session states involved the various different parties.

In preferred embodiments of the invention, the predetermined position is placed between positions of user identifiers in said configuration. Preferably, the predetermined position is placed substantially centrally between positions of user identifiers in said configuration. A central position can be used to indicate a currently significant role for a user in a manner which is intuitive to the user of the terminal.

Preferably, the method comprises generating indicia in said predetermined position, in response to receiving data indicating that a session state which does not relate to a particular party is current. Preferably, this occurs at least during a session state which does not relate to a particular party is a state in which no party currently holds the floor, allowing the user of the user terminal to ascertain such current state by glancing at the predetermined position.

In preferred embodiments of the invention, the method comprises placing an indicator between said predetermined position and the position of at least one user identifier for an indicated party, in response to in response to receiving data indicating that a current session state involves said indicated party. Preferably, the method comprises using a first directional indicator, indicating one role for said indicated party, as said indicator in one session state, and using a second directional indicator, indicating a different role for said indicated party, as said indicator in a different session state. The directional indicator may for example indicate that one role is an audio transmitting role, and the different role is an audio receiving role.

In an embodiment of the invention, the configuration includes a further position which is predetermined in said configuration, and the method comprises placing a further user identifier in said further predetermined position. Preferably, the further user identifier is an identifier of the user of the user terminal. In this way, the current role of the user of the user terminal is more readily ascertained; the user can glance at the further predetermined position in order to determine his current role.

Other aspects of the present invention provide a user terminal, a system comprising a user terminal and one or more nodes of a telecommunications network, and computer software arranged to perform the above.

Further features and advantages of the invention will become apparent from the following description of preferred embodiments of the invention, given by way of example only, which is made with reference to the accompanying drawings.

### Brief Description of Drawings

Figure 1 shows a known user interface for a PTT service;
Figure 2 shows an exemplary network architecture for implementing PTT according to the present invention;
Figures 3a and 3b show exemplary signalling flows for establishment and floor control of a PTT session according to the present invention;
Figures 4 to 12 show exemplary user interfaces provided on the display of a user terminal during different PTT session states according to a first embodiment the present invention;
Figures 13 to 16 show exemplary user interfaces provided on the display of a user terminal during different PTT session states according to a second embodiment the present invention; and
Figure 17 shows an exemplary user interfaces provided on the display of a user terminal during a PTT session according to a third embodiment the present invention.

### Detailed Description of Embodiments of the Invention

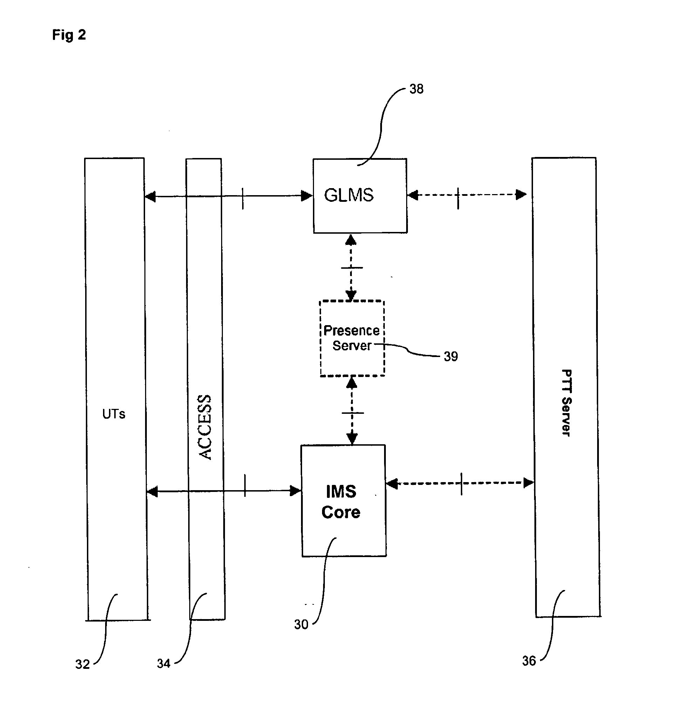

Figure 2 shows an exemplary network architecture for implementing PTT according to an embodiment of the invention, and following the PoC specifications mentioned above. The IP Multimedia Subsystem (IMS) core 30 includes a number of Session Initiation Protocol (SIP) proxies and SIP registrars which route signaling, via radio access network 34, between the User Terminals (UTs) 32 and a PTT server 36. PTT server 36 provides the PTT service and in IMS terms functions as an application server. In particular, PTT server acts as the end point for SIP and Real-time Transport Control Protocol (RTCP) signaling, provides policy control for user terminal access to PTT groups, manages PTT session establishment and disestablishment and manages control of the floor in PTT sessions. The Group and List Management Server (GLMS) 38 enables parties to manage contact lists, group memberships, and access lists. A user may define several PTT groups and may select a group to establish a PTT group communications session. Access lists are used by the user as a means of controlling which other users are allowed and which are not allowed to initiate PTT talk sessions with the user. Each user is associated with a user identity such as a SIP Uniform Resource Identifier (URI) or a telephone directory number. Each defined group of users is also provided with a group identity such as a SIP URI. A presence server 39 may optionally be used to provide presence information (such as the on-line status of parties) to the GLMS and PTT server.

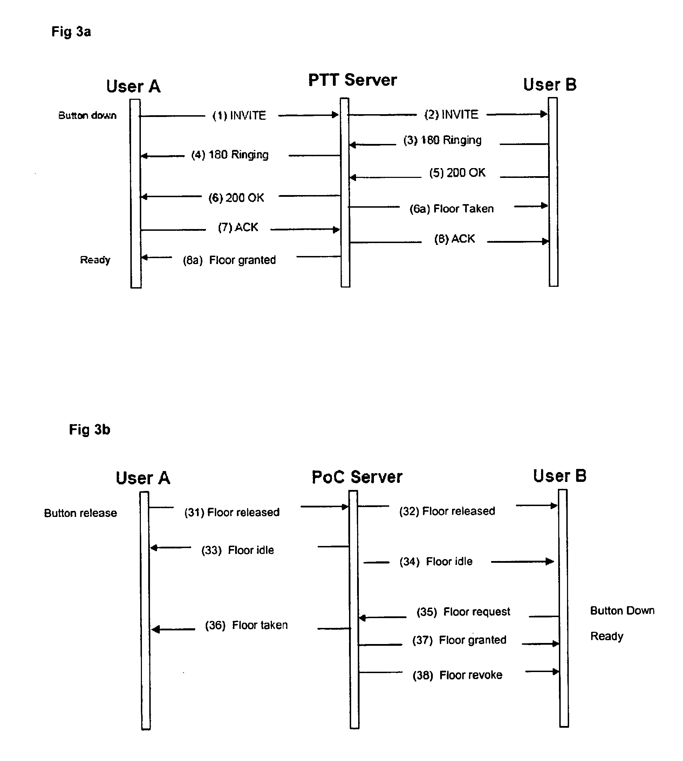

Exemplary signaling flows for PTT session establishment and control are shown in Figures 3a and 3b. Figure 3a shows an exemplary procedure for PTT session establishment and first grant of the floor, and Figure 3b shows an exemplary procedure for subsequent release and further control of the floor.

In Figure 3a, when user A depresses the PTT button to establish a PTT session with user B, user A's terminal sends (step 1) a first SIP INVITE message to the PTT server which then sends (step 2) a second SIP INVITE message to user terminal of user B. To indicate that the PTT session establishment has been requested, the user terminal of user B may send (step 3) a SIP 180 Ringing message to the PTT server which may then send (step 4) a SIP 180 Ringing message to the user terminal of user A. If user B accepts the PTT session, his or her user terminal sends (step 5) a first SIP 200 OK message to the PTT server which in response sends a second SIP 200 OK message to the user terminal of user A (step 6) and a message indicating that the floor has been taken by user A to the user terminal of user B (step 6a). The user terminal of user A sends (step 7) an ACK message to acknowledge receipt of the SIP 200 OK message to the PTT server which forwards (step 8) a further ACK message to the user terminal of user B. The PTT server then sends a message to the user terminal of user A indicating that the floor has been granted to user A (step 8a). At this point, user A has control of the floor and is ready to transmit speech to the user terminal of user B. With more than two parties, i.e. with additional PTT users C, D ... the procedure is the same except that the PTT replicates signalling messages to the user terminals of each of users B, C, D, etc.

In Figure 3b, when user A releases the PTT button, his or her user terminal sends (step 31) a message indicating that the floor has been released to the PTT server which sends (step 32) a further message indicating that the floor has been released to the user terminal of user B. In this example, there are no other parties waiting to speak and so the PTT server sends (steps 33 and 34) a message indicating that the floor is idle to both the user terminals of users A and B. At some later point in time, user B presses the PTT button and his or her user terminal sends (step 35) a message requesting the floor to the PTT server. Since the floor is idle, the PTT server sends (step 36) a floor taken message to the user terminal of user A and sends (step 37) a floor granted message to the user terminal of user B. User B is then ready to transmit speech. The PTT server may also initiate control of the floor. For example, it may send (step 38) a floor revoke message to the user terminal of user B is the user has kept control of the floor beyond a predetermined period. Note that after step 32, if another PTT user had been waiting for the floor (i.e. had his or her PTT button depressed but was still waiting for user A to release the floor) then the floor idle messages would not be sent. Instead, the PTT server would send a floor granted and one or more floor taken messages as described above. As with Figure 3a, with more than two parties, i.e. with additional PTT users C, D ... the procedure is the same except that the PTT replicates signalling messages to the user terminals of each of PTT users A, C, D etc - i.e. those users who are not in control of the floor.

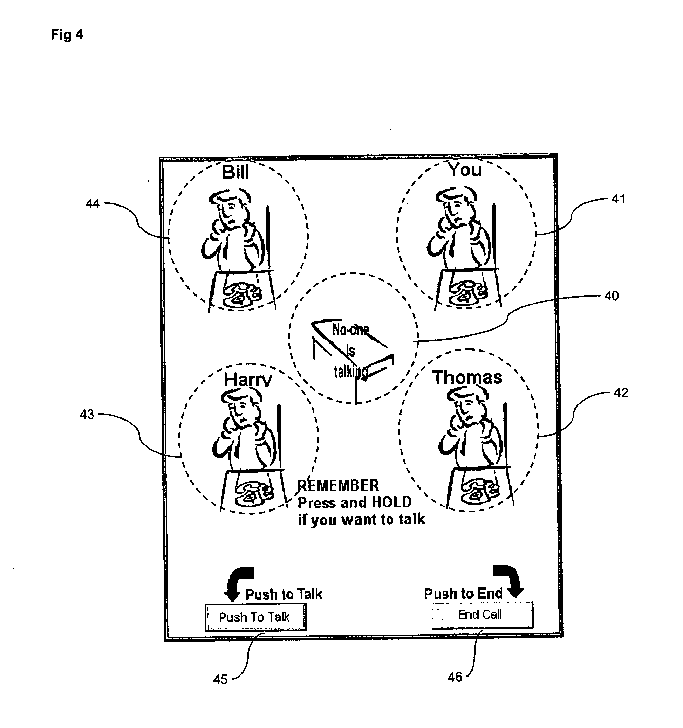

Figures 4 to 12 show examples of a user interface displayed on the display, for example a liquid crystal display screen, of a cellular radio telephone handset which is PTT-enabled, according to a first embodiment of the present invention. Figures 4 to 12 show the progress through the establishment and subsequent floor control and termination of an exemplary PTT session. Signalling messages sent between the PTT server and the terminal, as described above with reference to Figures 3a and 3b, trigger changes in the state of the user interface shown in Figures 4 to 12. It will be appreciated that the display may be generated locally by the party's terminal in response to signalling or other data received from the PTT server, and/or in response to user input on the terminal.

In this embodiment, a predetermined position 40 in a configuration of user identifiers is used to represent the "floor" of the session. This position, in this embodiment a central position 40, represented by a dotted circle, may contain an icon and associated text describing the current floor control state. If a party currently has control of the floor, a user identifier for the party having control of the floor is generated in the central position 40.

In Figure 4, a group session including three remote parties has been selected for a PTT group session by the party whose user interface display is shown, referred to herein further as the local party. The local party is indicted using the user identifier "You". The other parties, referred to herein as first, second and third remote parties respectively, are indicated in this example by the alphanumeric user identifiers "Bill", "Harry", "Thomas". The user identifiers for the remote parties are derived from data stored in the local party's contacts directory and the local party's user terminal looks these up from the corresponding the PTT service identifiers used for these parties in messaging with the PTT server, in order to generate the user identifiers on the user interface. Each party is further represented on the user interface using icons located adjacent each user identifier.

The display has an up-down direction and a side-to-side direction (corresponding to the top-bottom and left-right directions on the page in the Figures). The user identifiers, and the associated user icons, are positioned on the display in a configuration in which they are distributed around the display in both the up-down direction and the side-to-side direction, rather than a list format. In this embodiment, each user identifier and its associated icon is located in one of a member of respective outer positions 41, 42, 43, 44, represented by dotted circles, distributed around the central position 40. Note that, in this case, since there are four parties in the session, the configuration of the outer positions used is that of the four corners of a square or rectangle. However, for other numbers of parties, the configuration will be varied to accommodate the appropriate number of parties, and configurations such as the corners of a triangle, pentagon, hexagon, etc. or a circular configuration are adopted as appropriate, with the user identifiers distributed appropriately about the central position 40.

The icons associated with each user identifier are in this embodiment used to represent the current state of the call. Since, in the session state shown in Figure 4, the PTT session has yet to be established, none of the icons show that the parties have accepted the session invitation. A first softkey 45 is also displayed for enabling the user to depress and release a PTT button. A second softkey 46 is displayed for enabling the local party ("You") to end participation in the PTT session. The text generated in central position 40 currently shows that no party currently holds the floor.

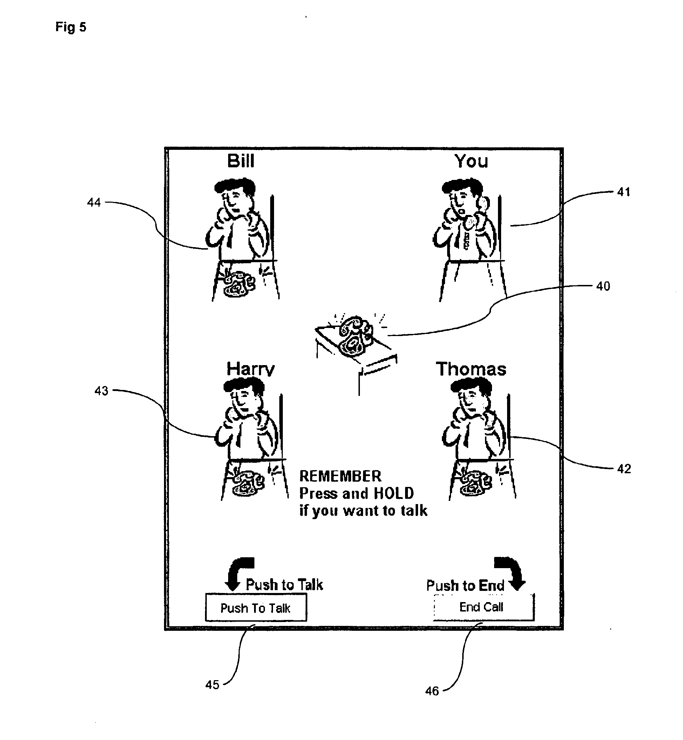

In Figure 5, the local party ("You") has just transmitted a PTT session set-up request. Icons are generated in end of the outer positions 42, 43, and 44 other than that representing the local party, position 41, and in the central position 40 to initiate and that the terminals of the remote parties ("Bill", "Harry" and "Thomas") are ringing to establish the PTT session. In this state of the session, none of the other parties have yet accepted.

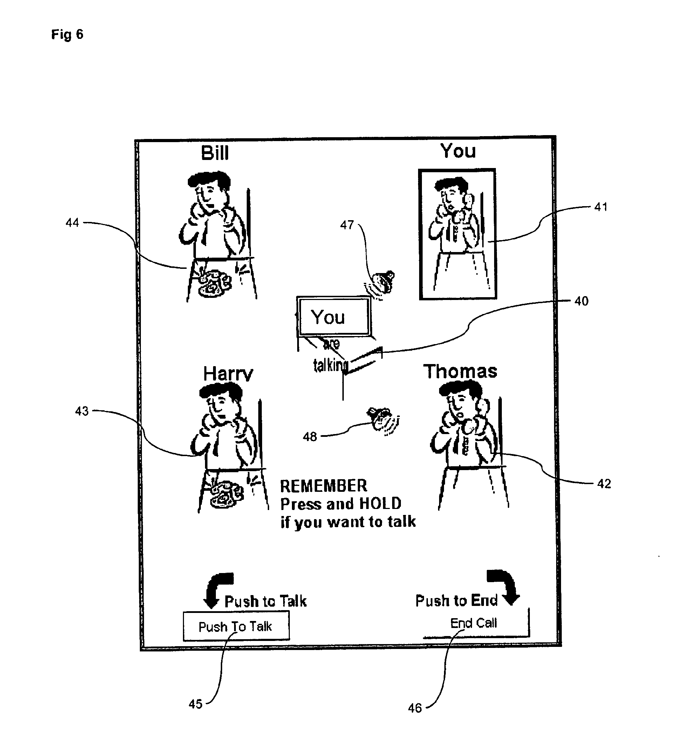

In Figure 6, the first remote party ("Thomas") has just accepted the PTT session and the icon in position 42 is altered to show that he has accepted the invitation to join the session. Additionally, a user identifier for the local party ("You") is placed in central position 40 to show that the local party has control of the floor. This state is further indicated by alteration of the icon in position 41 a first loudspeaker icon 47, placed between the position 41 representing the user currently having control of the floor and the central position 40. The icon 47 is directed from the outer position 41 towards the central position 40. A further loudspeaker icon 48 is directed from central position 40 to outer position 42 to indicate that the first remote party will receive any transmitted speech.

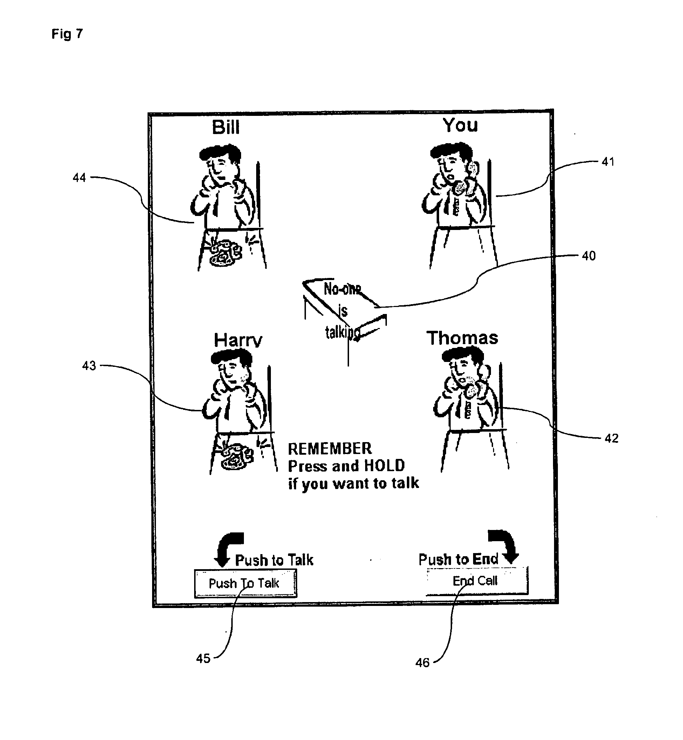

In Figure 7, the local party ("You") has just released softkey 45. Icons in the central position 40 and outer position 41 are altered and the two loudspeaker icons 47, 48 are removed to show that the floor is idle in the current session state. Note that two remote parties ("Bill" and "Harry") have not yet accepted the PTT session and are still in the ringing state as indicated by icons in each respective position 43, 44.

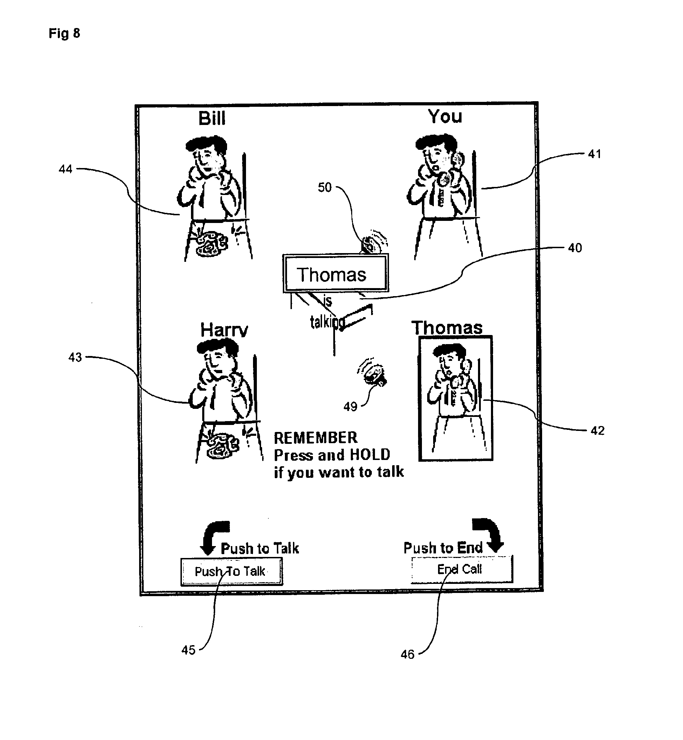

In Figure 8, the first remote party ("Thomas") has just depressed his PTT button and taken control of the floor. The user identifier located in central position 40 and the two loudspeaker icons 49, 50 show that the first remote party ("Thomas") has control of the floor and that the local party will receive any transmitted speech.

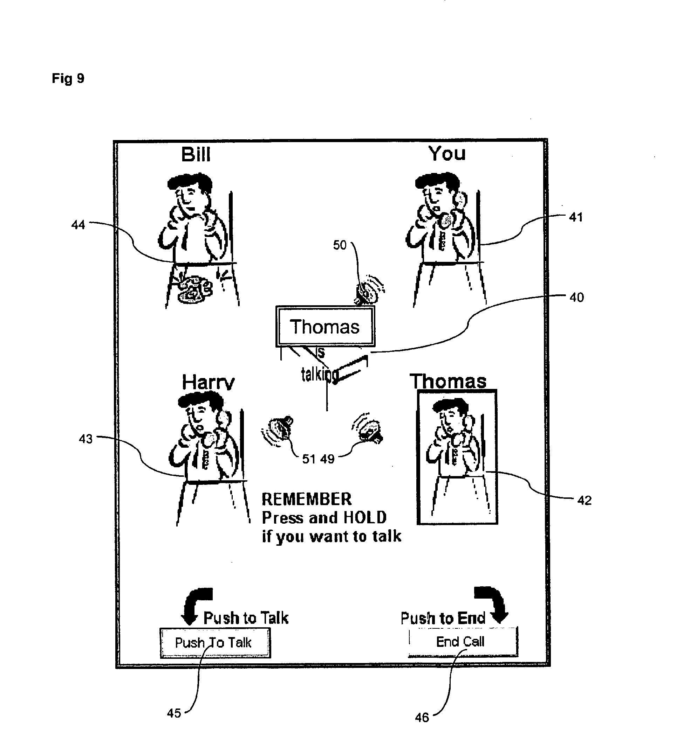

In Figure 9, the second remote party ("Harry") accepts the PTT session and icon in position 43 is altered to show that he has accepted the invitation to join the session. Additionally, a third loudspeaker icon 51 is placed between central position 40 and position 43 shows that the second remote party is receiving any transmitted speech.

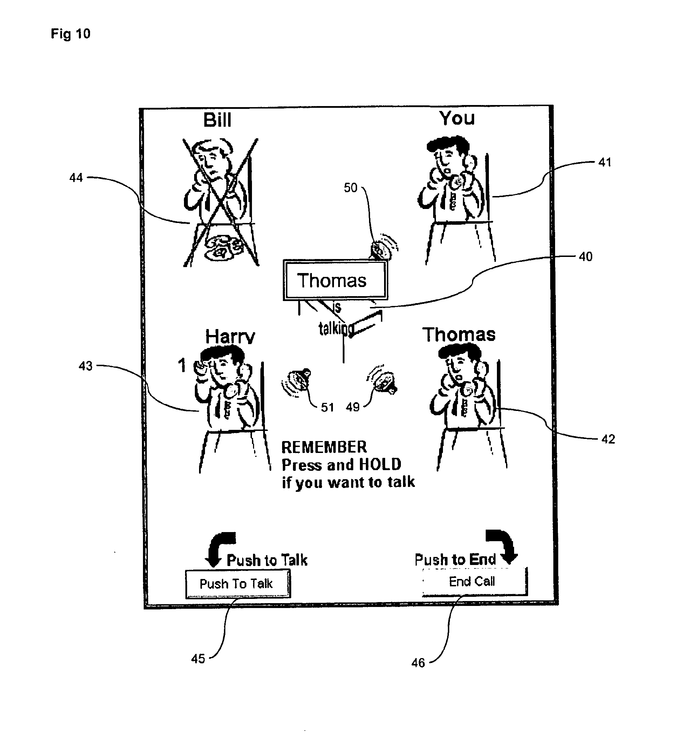

In Figure 10, the presence server 39 has just indicated to the PTT server 36 that the third remote party ("Bill") has gone off-line; this is signaled from the PTT server to the handset and the icon in the respective outer position 44 is altered to indicate this state. Also, the second remote party ("Harry") has just depressed his PTT button, although the first remote party ("Thomas") still has control of the floor. In this situation the PTT server places the second remote party in a queue for the floor. The icon in position 43 is altered to indicate the fact that the second remote party is in a queue for the floor and his position in that queue, by adding a numerical value indicating this queue position (in this example, number "1 ").

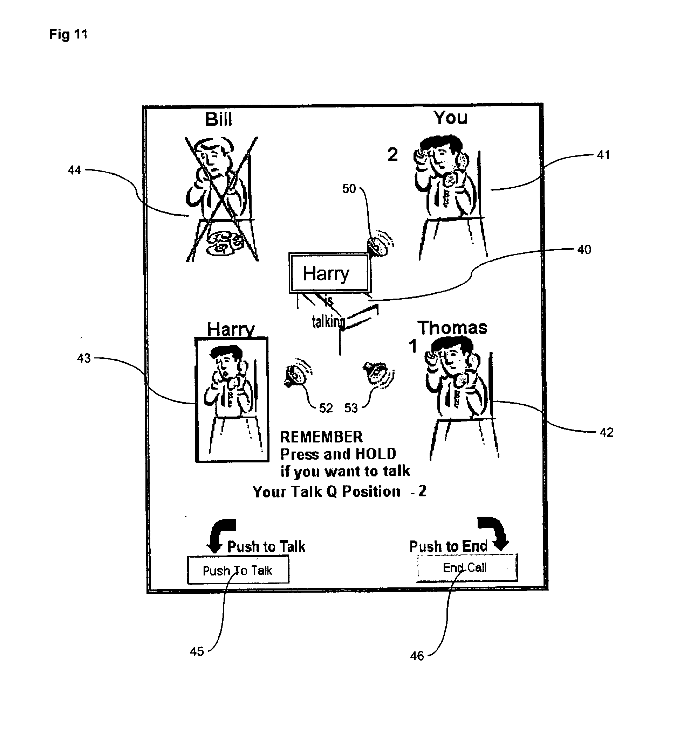

The parties may continue to communicate in the PTT session and various changes in the PTT session state are indicated. Thus, at some time later, in Figure 11, the second remote party ("Harry") now has control of the floor; the first remote party ("Thomas") is first and the local party ("You") is second in a queue for the floor. The third remote party ("Bill") is still off-line. This state is indicated with an appropriate new identifier in central position 40, appropriate icons in and outer position 41, 42, 43 and loudspeaker icons 50, 52, 53.

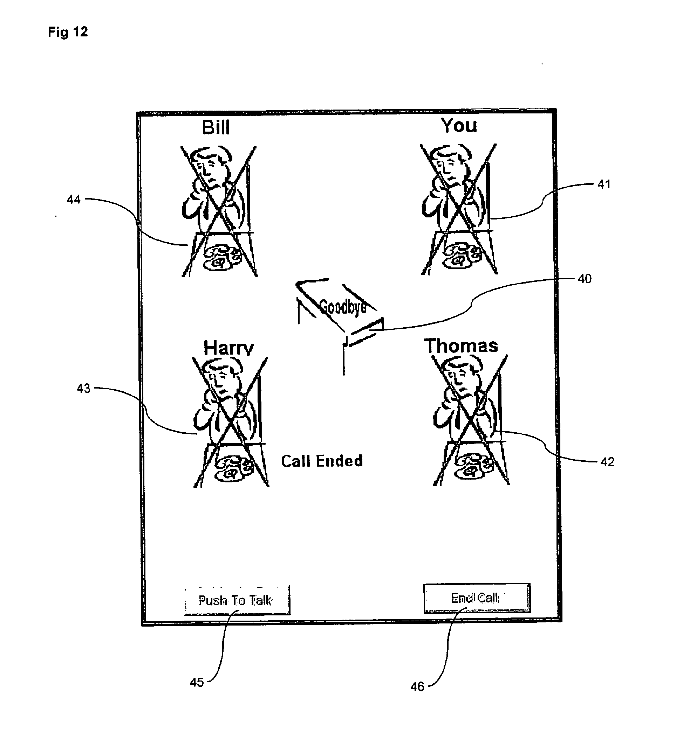

Finally, in Figure 12, the local party ("You") has activated softkey 46 to end the PTT session (or at least his participation in it) and a brief "goodbye" display is displayed.

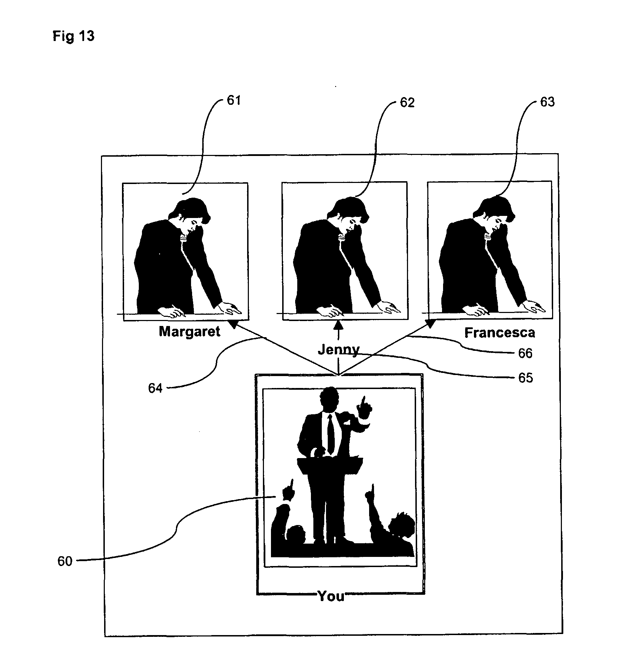

Figures 13 to 16 show a second embodiment of the invention. In Figure 13, the local party ("You") is represented by a large floor control icon in a predetermined position 60 at the bottom of the display with remote parties to the PTT session ("Margaret", "Jenny" and "Francesca") represented by smaller icons 51 in a linear configuration of positions 61, 62, 63 above. Arrows 64, 65, 66 located between theses positions show the flow of speech traffic in the current session state.

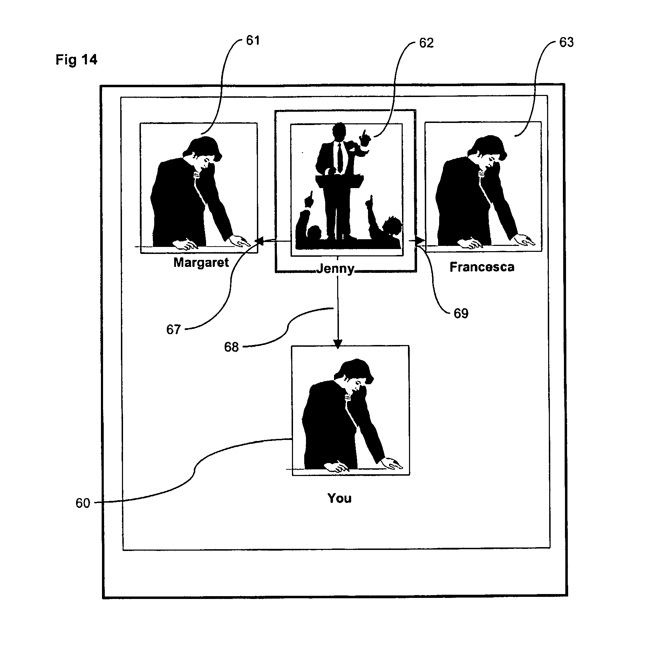

In Figure 14, one remote party ("Jenny") has taken control of the floor and for new identifier is placed in a predetermined position, central upper position 62, along with a floor control icon. Arrows 67, 68, 69 placed between the central upper position 62 and the other positions 60, 61, 63 indicate the direction of transfer of speech. Note that the local party icon is altered and reduced in size, although the position 60 remains the same.

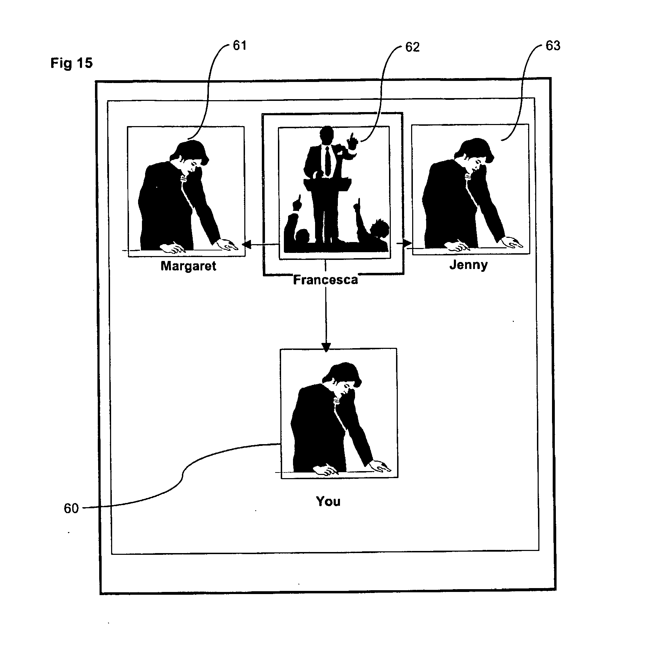

In Figure 15, a different remote party ("Francesca") has taken control of the floor and the user identifier in central upper position 62 is altered accordingly.

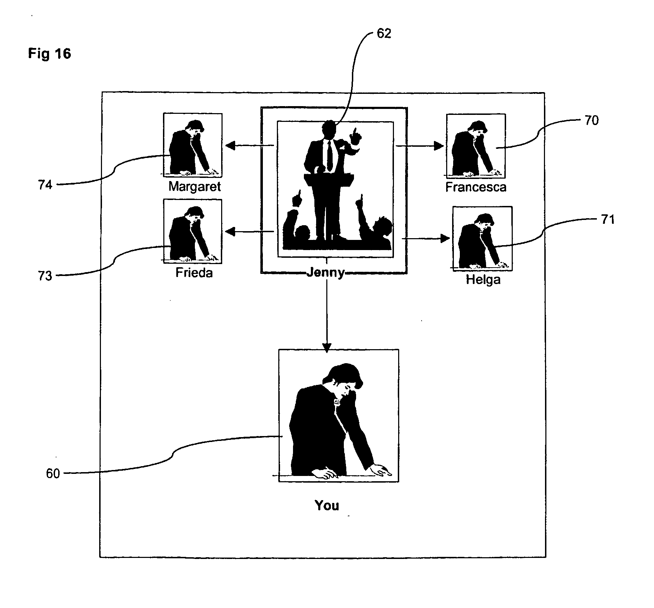

In Figure 16, five remote parties to a series are represented. An icon is placed in a predetermined position, central upper position 62, to represent a remote party ("Jenny") who has control of the floor; icons are placed in positions 70, 71, 72, 73 surrounding central position 62 to represent other remote parties ("Margaret", "Francesca", "Frieda" and "Helga") and an icon is placed in lower position 60 to represent the local party ("You"). Note that icons which are relatively small are used to represent remote parties which are not currently in control of the floor. During changes of session state, icons may not only be varied in size but also moved into different relative positions to provide further dynamic visual representations of changes of state to the user.

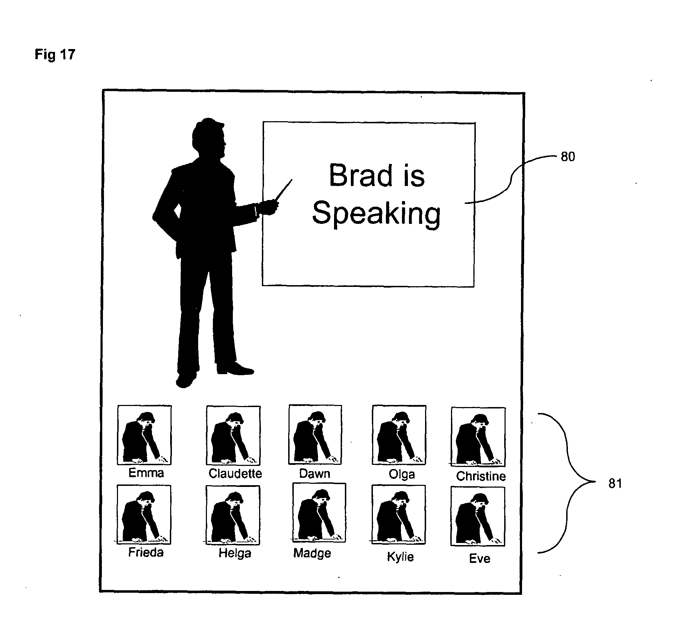

Figure 17 shows a user interface according to a third embodiment of the invention. One PTT session party ("Brad") has control of the floor and is shown as such by virtue of his own identifier and associated icon being positioned in a predetermined position 80 spatially above a set of user identifiers 81 icons for the other PTT session parties ("Emma", "Claudette", "Dawn", "Olga", "Christine", "Frieda", "Helga", "Madge", "Kylie" and "Eve"). If one of the other parties takes control of the floor, the positions and relative sizes of the user identifiers and associated icons are altered so that the party currently having floor control is indicated in upper position 80.

The above embodiments are to be understood as illustrative examples of the invention. Other embodiments are envisaged. For example, whilst in the above-described embodiments the user identifiers used are in the form of alphanumeric identifiers, other forms of user identifier may be used, such as photographic portraits. It will be appreciated that there are many other possibilities for visually representing relationships between PTT session parties potentially or actually participating in a PTT session. Further, whilst the above embodiments relate to representation in a user interface of the floor taken session state, other session states may be represented by positioning user identifiers in the predetermined position within the configuration of user identifiers, in accordance with different embodiments of the invention. These other session states may be supported by further signalling between the user terminals and the PTT server. Various session states may be indicated in this manner, including the following:
- floor request indication - to indicate a state in which a party is requesting permission to talk
- floor release indication - to indicate a state in which a party has released their permission to talk
- floor grant indication - to indicate a state in which the PTT server informs a requesting party that the floor has been granted
- floor idle indication - to indicate a state in which the PTT server informs all parties that the floor is idle
- floor deny indication - to indicate a state in which the PTT server informs a requesting party that the floor request is denied
- floor taken indication - to indicate a state in which the PTT server informs all parties that the floor has been granted to the indicated user
- floor revoke indication - to indicate a state in which the PTT server has removed the permission to talk from a party who has previously been granted the floor

Optionally, a party may be given priority in respect of taking control of the floor. For instance, a user may immediately take control of the floor on activating his PTT button, or may be immediately placed in first position in a queue for the floor so that he may immediately answer any questions from the other PTT session parties, although many others may be queuing to ask questions. This priority mechanism is implemented by the PTT server and may be visually reflected by placing the user identifier for the appropriate party in a predetermined position in the user interface displayed to parties.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of providing a user interface on a display of a user terminal during a push to talk communications session involving a user of the user terminal, the method comprising:
receiving data indicating current states of said session; and
generating a user interface on said display, said user interface including user identifiers for a plurality of different parties in the push to talk session, wherein said user identifiers are arranged in a configuration on said display, said configuration including a plurality of positions including a floor control indicating position, said floor control indicating position being a position which is predetermined in said configuration,
**characterized in that** the method further comprises the acts of:
placing a first user identifier, for a first party, in said floor control indicating position, in response to receiving data indicating that the first party currently has control of the floor of the push to talk session; and
in response to receiving data indicating that a second party currently has control of the floor of the push to talk session, removing said first user identifier from said floor control indicating position; and placing a second user identifier, for the second party, in said floor control indicating position.

2. A method according to claim 1, wherein the display comprises an up-down direction and a side-to-side direction, and wherein said configuration comprises user identifiers distributed across said display in both said up-down direction and said side-to-side direction.

3. A method according to any preceding claim, wherein said floor control indicating position is placed between positions of user identifiers in said configuration.

4. A method according to any preceding claim, wherein said floor control indicating position is placed substantially centrally between positions of user identifiers in said configuration.

5. A method according to any preceding claim, wherein said configuration includes a further position which is predetermined in said configuration,
wherein the method comprises placing a further user identifier in said further position.

6. A method according to any preceding claim, comprising generating indicia in said floor control indicating position, in response to receiving data indicating that a session state which does not relate to a particular party is current or is a state in which no party currently holds the floor.

7. A method according to any preceding claim, wherein the method comprises placing an indicator between said floor control indicating position and the position of at least one user identifier for an indicated party, in response to receiving data indicating that a current session state involves said indicated party.

8. A method according to claim 7, wherein the method comprises using a first directional indicator, indicating one role for said indicated party, as said indicator in one session state, and using a second directional indicator, indicating a different role for said indicated party, as said indicator in a different session state.

9. A method according to claim 8, wherein said one role is an audio transmitting role, and said different role is an audio receiving role.

10. A method according to any of the preceding claims, said method further comprising an act of receiving the current state data from a push to talk server.

11. A method according to any of the preceding claims, wherein at least one arrow placed between the floor control indicating position and the other positions in the configuration indicates the direction of transfer of speech.

12. A method according to any of the preceding claims, wherein the floor control indicating position is associated with an icon, said icon varying in size when the party associated with the floor control indicating position changes of state.

13. A user terminal for providing a user interface on a display of said user terminal during a push to talk communications session involving a user of the user terminal, the user equipment comprising:
means for receiving data indicating current states of said session; and
means for generating a user interface on said display, said user interface including user identifiers for a plurality of different parties in the push to talk session, wherein said user identifiers are arranged in a configuration on said display, said configuration including a plurality of positions including a floor control indicating position, said floor control indicating position being a position which is predetermined in said configuration,
**characterized in that** the user equipment further comprises:
means for placing a first user identifier, for a first party, in said floor control indicating position, in response to receiving data indicating that the first party currently has control of the floor of the push to talk session; and
means for, in response to receiving data indicating that a second party currently has control of the floor of the push to talk session, removing said first user identifier from said floor control indicating position; and placing a second user identifier, for the second party, in said floor control indicating position.

14. A system comprising a user terminal and one or more nodes of a telecommunications network arranged to perform the method of any of claims 1 to 12.

15. Computer software arranged to perform the method of any of claims 1 to 12.

## Patentansprüche

1. Verfahren zum Bereitstellen einer Anwenderschnittstelle auf einer Anzeige eines Anwenderendgeräts während einer Push-to-Talk-Kommunikationssitzung, in die ein Anwender des Anwenderendgeräts einbezogen ist, wobei das Verfahren Folgendes umfasst:
Empfangen von Daten, die aktuelle Zustände der Sitzung angeben; und
Erzeugen einer Anwenderschnittstelle auf der Anzeige, wobei die Anwenderschnittstelle Anwenderkennungen für mehrere verschiedene Teilnehmer an der Push-to-Talk-Sitzung enthält, wobei die Anwenderkennungen in einer Konfiguration auf der Anzeige angeordnet sind, wobei die Konfiguration mehrere Positionen enthält, die eine die Floor-Steuerung angebenden Position umfassen, wobei die die Floor-Steuerung angebende Position eine Position ist, die in der Konfiguration vorgegeben ist,
**dadurch gekennzeichnet, dass** das Verfahren ferner die folgenden Schritte umfasst:
Anordnen einer ersten Anwenderkennung für einen ersten Teilnehmer an der die Floor-Steuerung angebenden Position in Reaktion auf den Empfang von Daten, die angeben, dass derzeit der erste Teilnehmer die Steuerung des Floors der Push-to-Talk-Sitzung hat; und
in Reaktion auf den Empfang von Daten, die angeben, dass derzeit ein zweiter Teilnehmer die Steuerung des Floors der Push-to-Talk-Sitzung hat, Entfernen der ersten Anwenderkennung von der die Floor-Steuerung angebenden Position; und Anordnen einer zweiten Anwenderkennung für den zweiten Teilnehmer an der die Floor-Steuerung angebenden Position.

2. Verfahren nach Anspruch 1, wobei die Anzeige eine Aufwärts/Abwärts-Richtung und eine Seite/Seite-Richtung besitzt und wobei die Konfiguration Anwenderkennungen umfasst, die über die Anzeige sowohl in der Aufwärts/Abwärts-Richtung als auch in der Seite/Seite-Richtung verteilt sind.

3. Verfahren nach einem vorhergehenden Anspruch, wobei die die Floor-Steuerung angebende Position zwischen Positionen von Anwenderkennungen in der Konfiguration angeordnet ist.

4. Verfahren nach einem vorhergehenden Anspruch, wobei die die Floor-Steuerung angebende Position im Wesentlichen mittig zu Positionen von Anwenderkennungen in der Konfiguration angeordnet ist.

5. Verfahren nach einem vorhergehenden Anspruch, wobei die Konfiguration eine weitere Position enthält, die in der Konfiguration vorgegeben ist,
wobei das Verfahren das Anordnen einer weiteren Anwenderkennung an der weiteren Position umfasst.

6. Verfahren nach einem vorhergehenden Anspruch, das das Erzeugen von Angaben an der die Floor-Steuerung angebenden Position in Reaktion auf den Empfang von Daten, die angeben, dass ein Sitzungszustand, der nicht mit einem besonderen Teilnehmer in Beziehung steht, aktuell ist oder ein Zustand ist, in dem derzeit kein Teilnehmer den Floor hält, umfasst.

7. Verfahren nach einem vorhergehenden Anspruch, wobei das Verfahren das Anordnen eines Indikators zwischen der die Floor-Steuerung angebenden Position und der Position wenigstens einer Anwenderkennung für einen angegebenen Teilnehmer in Reaktion auf den Empfang von Daten, die angeben, dass ein derzeitiger Sitzungszustand den angegebenen Teilnehmer einbezieht, umfasst.

8. Verfahren nach Anspruch 7, wobei das Verfahren das Verwenden eines ersten Richtungsindikators, der eine Funktion des angegebenen Teilnehmers angibt, als den Indikator in einem Sitzungszustand und das Verwenden eines zweiten Richtungsindikators, der eine andere Funktion für den angegebenen Teilnehmer angibt, als den Indikator in einem anderen Sitzungszustand umfasst.

9. Verfahren nach Anspruch 8, wobei die eine Funktion eine Audiosendefunktion ist und die andere Funktion eine Audioempfangsfunktion ist.

10. Verfahren nach einem der vorhergehenden Ansprüche, wobei das Verfahren ferner den Schritt des Empfangens der Daten des derzeitigen Zustands von einem Push-to-Talk-Server umfasst.

11. Verfahren nach einem der vorhergehenden Ansprüche, wobei wenigstens ein Pfeil, der zwischen der die Floor-Steuerung angebenden Position und den anderen Positionen in der Konfiguration angeordnet ist, die Richtung der Übertragung von Sprache angibt.

12. Verfahren nach einem der vorhergehenden Ansprüche, wobei der die Floor-Steuerung angebenden Position ein Icon zugeordnet ist, wobei das Icon seine Größe verändert, wenn der Teilnehmer, der der die Floor-Steuerung angebenden Position zugeordnet ist, den Zustand ändert.

13. Anwenderendgerät zum Bereitstellen einer Anwenderschnittstelle auf einer Anzeige des Anwenderendgeräts während einer Push-to-Talk-Kommunikationssitzung, die einen Anwender des Anwenderendgeräts einbezieht, wobei das Anwendergerät Folgendes umfasst:
Mittel zum Empfangen von Daten, die derzeitige Zustände der Sitzung angeben; und
Mittel zum Erzeugen einer Anwenderschnittstelle auf der Anzeige, wobei die Anwenderschnittstelle Anwenderkennungen für mehrere verschiedene Teilnehmer an der Push-to-Talk-Sitzung enthält, wobei die Anwenderkennungen in einer Konfiguration auf der Anzeige angeordnet sind, wobei die Konfiguration mehrere Positionen enthält, die eine die Floor-Steuerung angebende Position enthalten, wobei die die Floor-Steuerung angebende Position eine Position ist, die in der Konfiguration vorgegeben ist,
**dadurch gekennzeichnet, dass** das Anwendergerät ferner Folgendes umfasst:
Mittel zum Anordnen einer ersten Anwenderkennung für einen ersten Teilnehmer an der die Floor-Steuerung angebenden Position in Reaktion auf den Empfang von Daten, die angeben, dass derzeit der erste Teilnehmer die Steuerung des Floors der Push-to-Talk-Sitzung hat; und
Mittel, um in Reaktion auf den Empfang von Daten, die angeben, dass derzeit ein zweiter Teilnehmer die Steuerung des Floors der Push-to-Talk-Sitzung hat, die erste Anwenderkennung aus der die Floor-Steuerung angebenden Position zu entfernen; und eine zweite Anwenderkennung für den zweiten Teilnehmer an der die Floor-Steuerung angebenden Position anzuordnen.

14. System, das ein Anwenderendgerät und einen oder mehrere Knoten eines Telekommunikationsnetzes umfasst und dafür ausgelegt ist, das Verfahren nach einem der Ansprüche 1 bis 12 auszuführen.

15. Computer-Software, die dafür ausgelegt ist, das Verfahren nach einem der Ansprüche 1 bis 12 auszuführen.

## Revendications

1. Procédé de fourniture d'une interface utilisateur sur un afficheur d'un terminal utilisateur durant une session de communications de conversation impliquant un utilisateur du terminal utilisateur, le procédé comprenant :
la réception de données indiquant des états courants de ladite session ; et
la génération d'une interface utilisateur sur ledit afficheur, ladite interface utilisateur comportant des identifiants d'utilisateur d'une pluralité de participants différents dans la session de conversation, lesdits identifiants d'utilisateur étant agencés dans une certaine configuration sur ledit afficheur, ladite configuration comportant une pluralité de positions comportant une position d'indication de prise de parole, ladite position d'indication de prise de parole étant une position qui est prédéterminée dans ladite configuration,
**caractérisé en ce que** le procédé comprend en outre les étapes consistant à :
placer un premier identifiant d'utilisateur, d'un premier participant, à ladite position d'indication de prise de parole, en réponse à la réception de données indiquant que le présent participant a présentement pris la parole dans la session de conversation ; et
en réponse à la réception de données indiquant qu'un second participant a présentement pris la parole dans la session de conversation, supprimer ledit premier identifiant d'utilisateur de ladite position d'indication de prise de parole ; et
placer un second identifiant d'utilisateur, du second participant, à ladite position d'indication de prise de parole.

2. Procédé selon la revendication 1, dans lequel l'afficheur comprend un sens de haut en bas et de gauche à droite, et dans lequel ladite configuration comprend des identifiants d'utilisateur distribués sur tout l'afficheur dans les deux sens de haut en bas et de gauche à droite.

3. Procédé selon l'une quelconque des revendications précédentes, dans lequel ladite position d'indication de prise de parole est placée entre des positions d'identifiants d'utilisateurs dans ladite configuration.

4. Procédé selon l'une quelconque des revendications précédentes, dans lequel ladite position d'indication de prise de parole est placée au centre de positions d'identifiants d'utilisateurs dans ladite configuration.

5. Procédé selon l'une quelconque des revendications précédentes, dans lequel ladite configuration comporte une autre position qui est déterminée dans ladite configuration,
le procédé comprenant le placement d'un autre identifiant d'utilisateur à ladite autre position.

6. Procédé selon l'une quelconque des revendications précédentes, comprenant la génération d'indices à ladite position d'indication de prise de parole, en réponse à la réception de données indiquant qu'un état de session ne concernant pas un participant particulier est en cours ou est un état dans lequel aucun participant n'a présentement pris la parole.

7. Procédé selon l'une quelconque des revendications précédentes, comprenant en outre le placement d'un indicateur entre ladite position d'indication de prise de parole et la position d'au moins un identifiant d'utilisateur d'un participant indiqué, en réponse à la réception de données indiquant qu'un état de session courant implique ledit participant indiqué.

8. Procédé selon la revendication 7, comprenant l'utilisation d'un premier indicateur directionnel, indiquant un rôle dudit participant indiqué, comme ledit indicateur dans un état de session, et l'utilisation d'un second indicateur directionnel, indiquant un rôle différent dudit participant indiqué, come dit indicateur dans un état de session différent.

9. Procédé selon la revendication 8, dans lequel ledit rôle est un rôle d'émission audio, et ledit rôle différent est un rôle de réception audio.

10. Procédé selon l'une quelconque des revendications précédentes, le procédé comprenant en outre une étape de réception des données d'état courant depuis un serveur de conversation.

11. Procédé selon l'une quelconque des revendications précédentes, dans lequel au moins une flèche placée entre la position d'indication de prise de parole et les autres positions dans la configuration indique la direction du transfert vocal.

12. Procédé selon l'une quelconque des revendications précédentes, dans lequel ladite position d'indication de prise de parole est associée à une icône, ladite icône variant en taille quand le participant associé à la position d'indication de prise de parole change d'état.

13. Terminal utilisateur destiné à fournir une interface utilisateur sur un afficheur dudit terminal utilisateur durant une session de communications de conversation impliquant un utilisateur du terminal utilisateur, l'équipement utilisateur comprenant :
un moyen de réception de données indiquant des états courants de ladite session ; et
un moyen de génération d'une interface utilisateur sur ledit affichage, ladite interface utilisateur comportant des identifiants d'utilisateur d'une pluralité de participants différents dans la session de conversation, lesdits identifiants d'utilisateurs étant agencés dans une certaine configuration sur ledit afficheur, ladite configuration comportant une pluralité de positions comportant une position d'indication de prise de parole, ladite position d'indication de prise de parole étant une position qui est prédéterminée dans ladite configuration,
**caractérisé en ce que** l'équipement utilisateur comprend en outre :
un moyen de placement d'un premier identifiant d'utilisateur, d'un premier participant, à ladite position d'indication de prise de parole, en réponse à la réception de données indiquant que le premier participant a présentement pris la parole dans la session de conversation ; et
un moyen de suppression, en réponse à la réception de données indiquant qu'un second participant a présentement pris la parole dans la session de conversation, dudit premier identifiant d'utilisateur de ladite position d'indication de prise de parole ; et de placement d'un second identifiant d'utilisateur, du second participant, à ladite position d'indication de prise de parole.

14. Système comprenant un terminal utilisateur et un ou plusieurs noeuds d'un réseau de télécommunications agencé pour exécuter le procédé selon l'une quelconque des revendications précédentes, 1 à 12.

15. Logiciel information agencé pour exécuter le procédé selon l'une quelconque des revendications 1 à 12.
